# EUROPEAN PATENT SPECIFICATION

(11) **EP 0 578 006 B1**
(45) Date of publication and mention of the grant of the patent: **18.12.1996**
(21) Application number: 93109493.2
(22) Date of filing: 15.06.1993
(51) Int. Cl.: D06F 39/00, A47L 15/42

(54) **Method for purifying water in a washing machine**
Verfahren zum Reinigen von Wasser in einer Waschmaschine
Procédé pour purifier l'eau dans une machine à laver

(30) Priority: 06.07.1992 IT PN920055
(43) Date of publication of application: 12.01.1994
(73) Proprietor: ELECTROLUX ZANUSSI ELETTRODOMESTICI S.p.A., I-33170 Pordenone (IT)
(72) Inventor: Durazzani, Piero, I-33080 Porcia, Pordenone (IT); Tabasso, Mario, I-33080 Porcia, Pordenone (IT); Sist, Rosa, I-33170 Pordenone (IT)
(74) Representative: Giugni, Valter

(56) References cited:
- EP-A- 0 449 060
- EP-A- 0 467 028
- DE-A- 3 513 939
- DE-A- 3 513 940
- US-A- 4 156 621
- PATENT ABSTRACTS OF JAPAN vol. 006, no. 011 (C-088)22 January 1982 & JP-A-56 136 693 (MITSUBISHI HEAVY IND LTD) 26 October 1981

## Description

This invention relates to a method for filtrating and/or purifying the water that is used for washing clothes or dishes, particularly in household-type washing machines.

The process of washing clothes or dishes in household-type automatic washing machines is widely known to use water from the water supply tap which is heated up, mixed with appropriate detergent substances and either pumped onto the items to be washed or collected in a tub to form a bath in which the items to be washed are dipped and agitated.

These washing processes are also known for their effectiveness to be heavily dependent on the quality characteristics of the water used for washing; in particular, the hardness of the water, ie. the concentration of calcium and magnesium ions contained therein, leads to a couple of drawbacks: first of all, the presence of said calcium and magnesium ions in the wash water inhibits the action of surfactant substances contained in the detergents, so that in practice it can be affirmed that, all other conditions being similar, the harder the water, the larger the amount of detergent that needs to be added into it so as to ensure an equally acceptable washing results.

It is in fact estimated that, if approx. 130 g. of detergent are required to do the washing of 5 kg of normally soiled clothes in pure water, the amount goes up to 240 g. if the same washing is done in water having a relatively high hardness degree.

Considering both the average frequency at which a washing machine is used at home and the relatively high costs of detergent aids, the economical advantage that would derive from the use of purified water is easily appreciated.

It is furthermore quite obvious that such a circumstance is still much more true in the case of dishwashers, which are usually in operation once or even twice each day throughout the year, thereby generating a correspondingly huge quantity of contaminated water, even if the fact has to be taken into account that the penetration rate of dishwashers in households in general, albeit tending to grow steadily, is still significantly lower than the penetration rate of clothes washing machines.

A further aspect that needs being increasingly taken into due account is that of the considerable pollution effect being brought about by the huge amounts of detergents which are each day brought into the environment with the water being discharged from these machines, and which could on the contrary be retained and saved if they were used in a more moderate way.

Furthermore, said calcium and magnesium ions have a strong tendency to get combined and settled on to hot surfaces: this leads to the severely disturbing drawback of scale forming on the resistance-type heating elements used to heat up the water, with the notoriously resulting negative effects in terms of loss of efficiency and durability (shorter life) of the same heating elements.

Different methods have been employed or proposed in view of removing said negative effects through a reduction in the presence of calcium ions or other salts in general.

A generally known method lies in the practice of letting the water be circulated through appropriate chemical substances (zeolites and the like) having the property of intercepting and fixing these ions and salts being present in the water.

This water softening method is for instance largely used in household-type dishwashing machines.

However, this technique, albeit quite easy to implement, is not fully satisfactory , since it requires the provision of reservoirs, conduits, etc., which take up a lot of that space which is always at a premium in such home appliances.

Furthermore, it necessarily involves a higher complexity in the control circuits, and all this of course leads to significantly higher costs, and is even less acceptable for use in clothes washing machines requiring water to be supplied and filled in at a considerable flow pressure in order to flush the detergent away from the corresponding compartment in the detergent dispenser and admit it into the tub.

As a matter of fact, if one of said water softening devices is included in the water supply circuit of a washing machine downstream of, ie. after the appropriately provided air break (as called for by law regulations) and upstream of, ie. before the detergent dispensing reservoirs, an unacceptable reduction in the flow pressure of the water through said reservoirs would occur due to the high water flow resistance created by said water softening device.

Such a drawback is on the contrary scarcely important in dishwashing machines, since the detergent is usually placed directly in the tank in these machines and, therefore, no particularly high water flow pressure needs to be maintained after the air break.

A purification method applicable to water from washing processes is known from EP-A-0 467 028 to be efficient, economical, free from any particular installation-related requirement or constraint, and capable of handling an adequate quantity of water before the next washing process is started.

Such a method uses the characteristics of the reverse-osmosis and/or ultrafiltration processes as applied to a clothes washing machine in order to achieve enhanced characteristics and efficiencies in the filtration of the water and also in order to be able to use said properties in view of recovering used water for re-use in the washing process, so as to come to an overall reduction in the amount of fresh water taken from the water supply tap, thereby making a considerable step forward in the pursuit of what is widely known to be a basic design target for all manufacturers of household washing machines in general.

The method disclosed in the above cited patent specification practically reaches its basic aim (the example provided in said patent specification, which showed how a clothes washing machine without any provision to purify and recover used process water was using a total 57.2 liters to complete a cycle, whereas water consumption in the same clothes washing machine using an embodiment according to the invention in said patent amounted to merely 33 liters, thereby saving a full 24 liters per cycle of fresh water from the tap, should be remembered in this connection).

However, the proposed method can be further improved to a significant extent as far as both the overall water consumption and the detergent consumption are concerned.

As a matter of fact, said estimated overall water consumption of 33 liters, as considered in the above cited example to be necessary to complete a washing process, is almost solely ascribable to the fresh-water filled in to carry out the last three rinses, whereas that amount of water, under proper conditions, can actually be further filtered and recovered.

It would therefore be desirable, and it is actually an object of the present invention, to provide a household-type washing machine to handle either clothes or dishes, which requires a minimum amount of water and detergent to be used in the washing process, without impairing its washing performance capabilities, while making use of known techniques.

Such an aim is reached in a washing machine which has such construction features as substantially described with particular reference to the appended Claims.

The invention will be further described hereinafter, wherein its application to a clothes washing machine is illustrated by way of non-limiting example with reference to the accompanying drawings, in which:
- Figure 1 is a schematical view of a portion of the water circuit of a clothes washing machine according to the present invention;
- Figure 2 is a view of an improvement in the clothes washing machine shown in Figure 1;
- Figure 3 is a view of an improvement in the clothes washing machine shown in Figure 2.

The basic characteristics of both the reverse-osmosis and ultrafiltration processes are assumed in this connection to be already well-known. In any case, reference should be made to the afore cited patent specification for a concise, but complete description of said characteristics.

The basic idea behind the present invention lies in associating a preferably household-type washing machine, such as a clothes washing machine or a dishwashing machine, with a process for purifying the water to be used for washing, which is based on ultrafiltration, nanofiltration and reverse osmosis depending on the desired extent to which the water is to be purified for practical purposes, said purification process being applied by substantially submitting to subsequently reapeated "cascade" treatments each load of purified water obtained from the preceding purification stage, starting from the purification of the amount of water being discharged at the end of the washing phase of the machine.

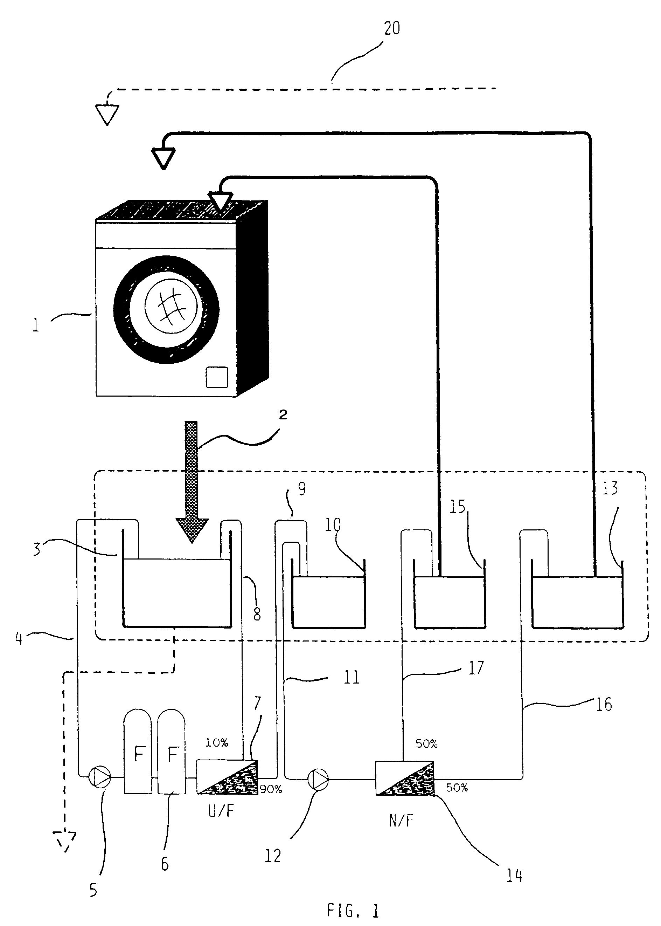

With reference to Figure 1, the liquid flow circulation arrangement is illustrated schematically along with the position and the type or nature of the different filters being provided in said water flow arrangement.

A household clothes washing machine 1 of the well-known "Jet System" type can be seen as being represented there, in which all of the liquor 2 discharged throughout a washing process, ie. comprising the wash and rinse liquor for an aggregate total amount of approx. 70 liters, is indicated symbolically with an arrow and is shown to be conveyed into a reservoir 3.

From this reservoir 3, through a conduit 4 and a pump 5, the contaminated water coming from the washing phase of the process is filtered by one or several mechanical filter means 6, the purpose of which is to mechanically retain coarse-grained or coarse-sized soil particles and foreign matters, also in view of preventing the following filtering stages from becoming clogged.

The liquor flowing out from said filter means is let into an ultrafiltration cell 7 which is effective in separating very fine particles down to a size of approx. 10³ nm, as indicated in Table 1.

The characteristics of this cell are essentially dependent on the characteristics of the membrane contained therein. Anyway, the ultrafiltration cell considered in connection with the case being dealt with is made so as to be capable of filtering through 90 percent of the liquor and holding back the remaining 10 percent containing soil particles and macro-molecules, said retained liquor being then either caused to flow back into the contaminated-liquor reservoir 3, through a conduit 8, or definitively discharged from the machine.

The liquor filtered by the cell 7 contains essentially water plus the components of the detergent substances and most of the inorganic salts, and through a conduit 9 is conveyed into a second reservoir 10, the purpose of which is to provide a buffer storage reservoir waiting for the next phase.

From this buffer storage reservoir, the liquor is then drawn through a conduit 11 and, by means of a second pump 12, is caused to flow into a nanofiltration cell 14.

Even the characteristics of this nanofiltration cell can be defined at will within the limits set by the characteristics of the membranes being available to this purpose. Anyway, said nanofiltration cell 14 is arranged to treat the in-flowing liquor by filtering 50 percent of the liquor containing substances with a M.W. (molecular weight) >200, such as surfactants, polyphosphates, zeolites, enzymes and the like, and is capable of discriminating molecules having an average size of 10 nm (see Table 1).

The thus permeated liquor is then sent to a reservoir 13 through a further conduit 16, while the remaining 50 percent of unfiltered liquor, which mainly contains substances with a molecular weight <200, such as carbonates, sulfates, chlorates and the like, is in turn sent to a reservoir 15 through a further conduit 17.

In conclusion, the arrangement calls for the presence of four reservoirs, ie. the reservoir 3 containing a concentrate of wash liquor and, therefore, soil; the reservoir 10 acting merely as a buffer storage; the reservoir 15 containing water, detergent and mineral salts; and the reservoir 13 containing just water and mineral salts.

At the end of the sequence of the various filtration

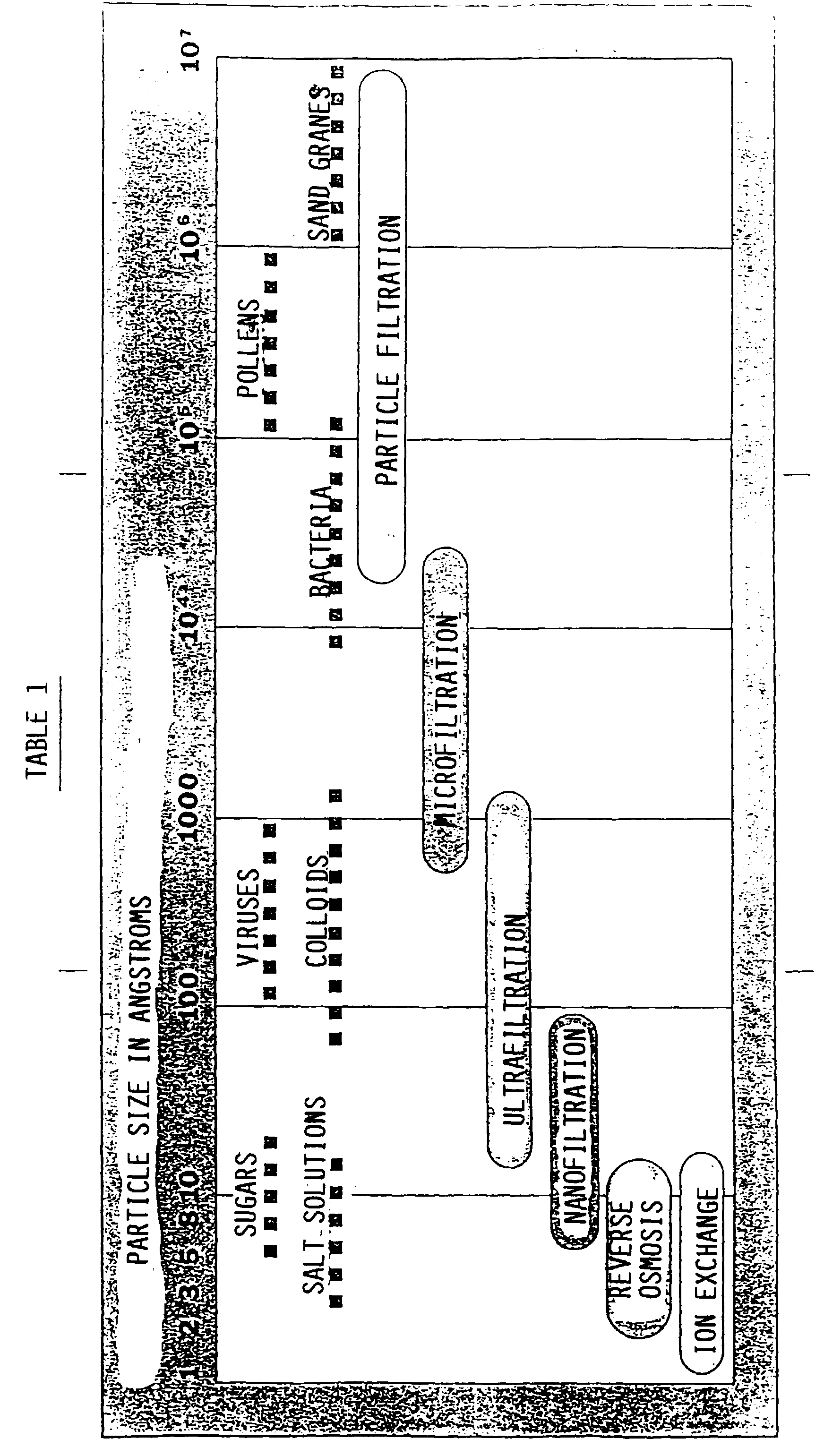

processes, the result is that, based on the afore cited example of a clothes washing machine of the "Jet System" type, the different reservoirs will contain the following quantities of liquor, wherein said liquor will have a composition as indicated in the Table below:

| **liters** | | **composition** |
|---|---|---|
| reservoir 3 | (60) 6 ^{*)} | all of the soil and the substances added to the water |
| reservoir 10 | 54 | all of the substances added |
| reservoir 15 | 26 | substances with a molecular weight <200 approx. (such as carbonates, sulfates, chlorates, hypochlorites, some silicates, etc.) |
| reservoir 13 | 27 | substances with a molecular weight >200 approx. (such as surfactants, polyphosphates, zeolites, enzymes, etc.) |

| | | |
|---|---|---|
| *) It should be noticed that approx. 3 out of the overall 60 liters of water which are required to complete an entire washing process are retained in the clothes, while the remaining 57 liters are discharged. | | |

Furthermore, the 6 liters of very contaminated water (practically a concentrate of soil) that remain in the reservoir 3 at the end of the filtration cycle in the ultrafiltration cell 7 are definitively discharged from the machine.

Anyone skilled in the art will at this point be able to appreciate the way in which this invention can be practically used in a washing machine: as a matter of fact, the availability of several reservoirs containing liquors that have different compositions, but are obtained from the filtration of the liquor discharged from the washing process, enables the liquor to be each time filled into the wash tub to be selected and metered from the appropriate reservoir so as to each time optimize the consumption of both water and detergent, as it has been previously explained.

As a matter of fact, after all of the water from the washing phase of the process has been first recovered into the reservoir 3 and then treated through the described sequence of filtering processes, the next washing process can be carried out by selectively taking the liquor needed in the various process phases as follows:
- 1st phase: washing: - 13 liters of liquor are taken from the reservoir 15.
- 2nd phase: 1st rinse: - The remaining 13 liters are taken from the reservoir 15 (the liquor will have cooled down in the meanwhile).
- 3rd phase: 2nd rinse: - 11 liters of liquor are taken from the reservoir 13.
- 4th phase: 3rd rinse: - Utilization of 11 liters of liquor taken from the reservoir 13, where 5 liters are left.
- 5th phase: 4th rinse: - 11 liters are used, 5 of which are taken from the reservoir 13 and 6 further liters are taken directly from the water supply mains 20.

As it can be seen, the aggregate amount of the liquor taken from the recovery reservoirs for use in the various phases of the washing process strikes a good balance with the amount of water recovered and treated from a previous washing process, since the 6 liters of fresh water integrated from the water supply mains actually correspond to the 6 liters of liquor that are definitively eliminated from the reservoir 3 after the treatment in the cell 7, as previously illustrated.

A further improvement to the present invention is possible when the fact is considered that, for the washing phase of the process, only 13 liters of water are required out of the overall 26 liters being available in the reservoir 15, and that this particular phase also requires addition of detergents, which are on the contrary diluted in all of the 26 liters of liquor collected in said reservoir.

Furthermore, the liquor containing detergents that remains in the reservoir 15 is also used to fill the tub in order to carry out the first rinse phase, as indicated above, so that the presence of a certain amount of detergents in that liquor, albeit quite diluted, will undoubtedly prove detrimental to some extent to the effectiveness of said rinse cycle.

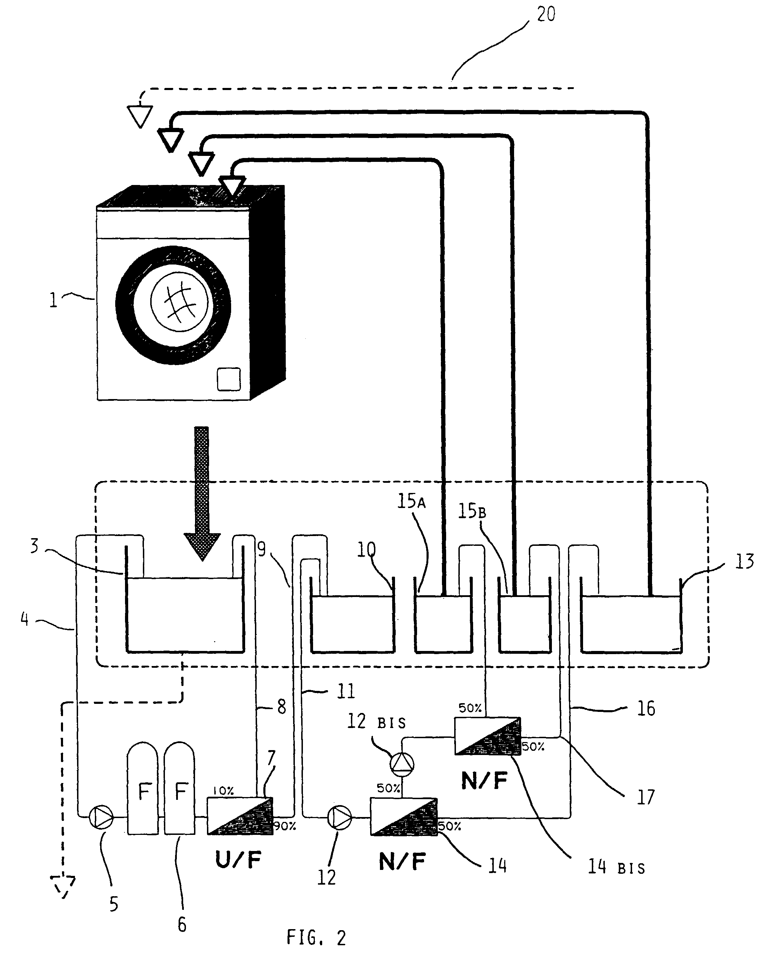

With reference to the accompanying Figure 2, said improvement consists in letting the liquor held back by the nanofiltration cell 14 undergo a further treatment through a new nanofiltration process, by inserting a pump 12bis upstream of the new nanofiltration cell 14bis and separating the reservoir 15 into two distinct reservoirs 15a and 15b, wherein the reservoir 15a is arranged to collect the liquor retained by said second nanofiltration cell 14bis and the reservoir 15b is arranged to collect the liquor permeated through said cell.

Since the washing phase of the process requires 13 liters of liquor, and this amount corresponds to exactly half of the 26 liters that were previously filled into the reservoir 15, all that it is required is to have the cell 14bis arranged in such a way that half of the whole amount of liquor (ie. 13 liters) is actually retained, and then sent into the reservoir 15a, while the remaining 13 liters are let through into the reservoir 15b. Such an improvement, further to enhancing the degree of purity of the liquor in the reservoir 15b used to fill the tub for the first rinse phase of the process, brings about a greater detergent concentration in the liquor stored in the reservoir 15a in view of its use to supply the washing phase of the process, which can therefore be carried out using less detergent and lowering its environment polluting effect, while the corresponding tables concerning the availability of recyclable liquor in the various reservoirs and the use of the same liquor in the various process phases, change as follows:

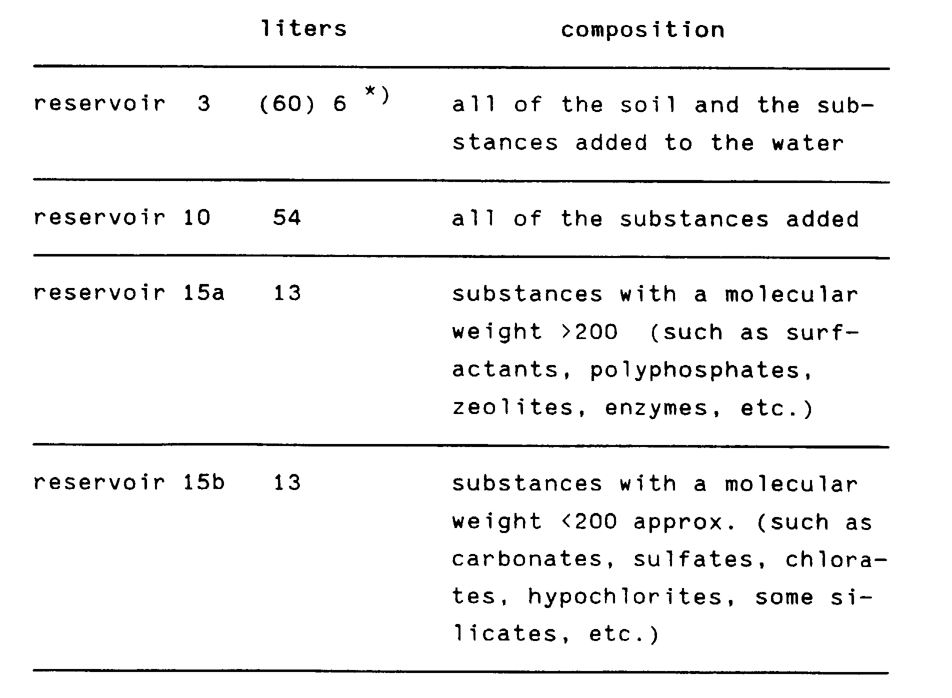

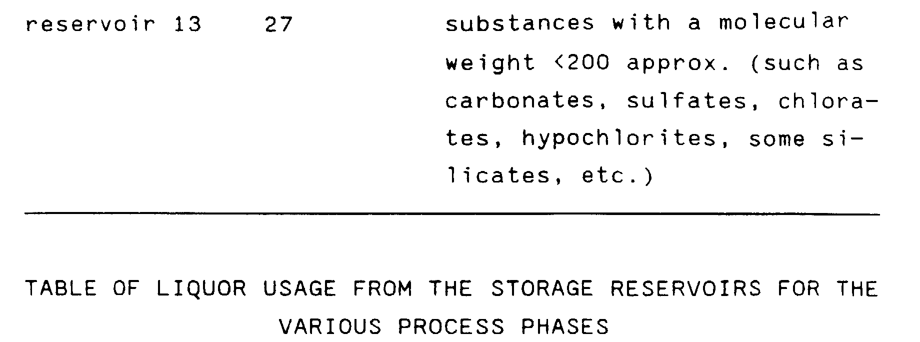

- 1st phase: washing: - 13 liters of liquor are taken from the reservoir 15a.
- 2nd phase: 1st rinse: - 13 liters of liquor are taken from the reservoir 15b (the liquor will have cooled down in the meanwhile).
- 3rd phase: 2nd rinse: - 11 liters of liquor are taken from the reservoir 13.
- 4th phase: 3rd rinse: - Utilization of 11 liters of liquor taken from the reservoir 13, where 5 liters are left.
- 5th phase: 4th rinse: - 11 liters are used, 5 of which are taken from the reservoir 13 and 6 further liters are taken directly from the water supply mains 20.

A further improvement to the present invention is possible when the fact is considered that the liquor being discharged by the machine from the last rinse phase, or last rinse phases, is rather clean so that, if this liquor is conveyed into the reservoir 3 along with the one discharged from the previous process phases, it mixes up with the more contaminated liquor already stored there. In a subsequent process phase, all of the liquor contained in the reservoir 3 is treated in view of separating various amounts of liquor with different degrees of purity. This of course means that a process is practically carried out in order to separate what was originally already separated and has been then unappropriately mixed.

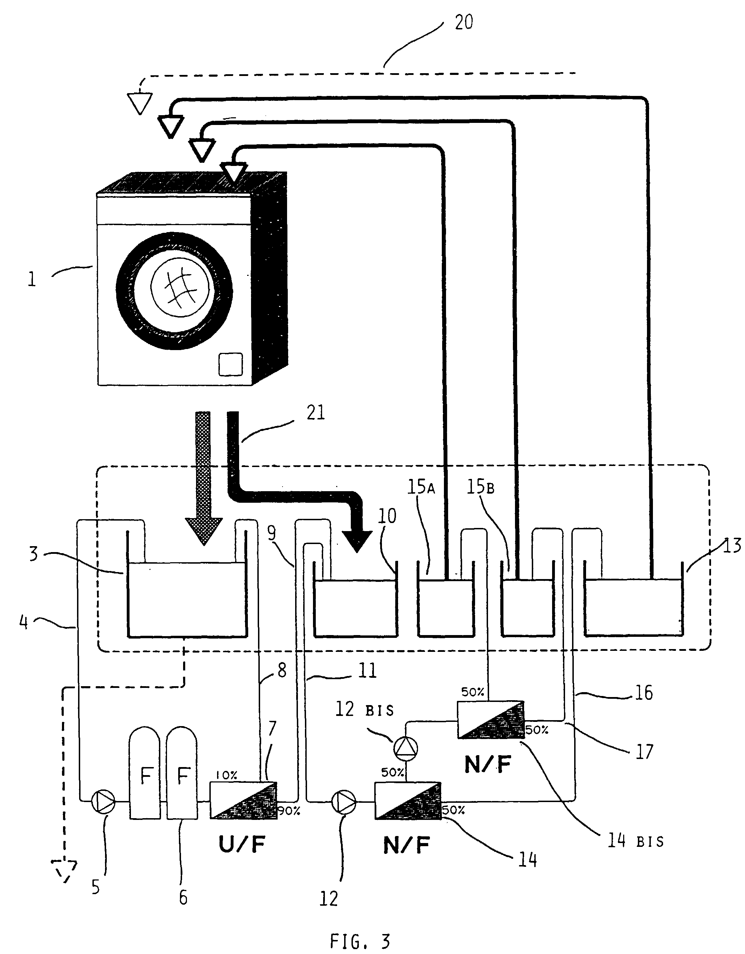

In order to avoid performing this essentially superfluous separation operation, it can be seen, with reference to Figure 3, that the machine can be provided with a further water circuit, as indicated schematically by the arrow 21, which is appropriately equipped with electromagnetically actuated valves to direct the water load into the reservoir 10 or, depending on the degree of purity required for the rinse water, even into the reservoir 15b or 13.

Anyone skilled in the art would of course be able to properly arrange the water circuits and the related control means in order to achieve the above indicated functions, according to the desired allocation of the various fractions of purified liquor.

As far as the size or dimension to be given to the various component parts involved, flow rates, pressures, etc. is concerned, reference is again made to what has been indicated in this connection in the afore cited patent specification, particularly in connection with the selection of such flow rates as to ensure that the various purification treatment steps are completed in a period of time that is shorter than the time usually elapsing from the end of a washing process to the beginning of the next one, ie. between two subsequent uses of the washing machine.

It is furthermore particularly advantageous that the above described washing process be carried out in a washing machine containing all of the required reservoirs.

To this purpose, considering that there are many of such reservoirs to be used in the process according to this invention, and that the liquors contained in said reservoirs are interchangeable in that they are decanted, ie. poured off from a reservoir into another one, in view of saving some space inside the machine it may be advantageous to adopt the technique based on the use of so-called collapsible reservoirs capable of mutually exchanging the volumes taken up by them when filled, as described in the Italian patent application no. PN91A000081 filed by the same applicant.

Anyone skilled in the art will of course appreciate that the afore described embodiments of the present invention have been illustrated with reference to a clothes washing machine by mere way of example, and that the teachings contained therein can be used, with the appropriate constructive adaptations, also in conjunction with a dishwashing machine, since also dishwashing machines actually operate by performing a sequence of distinct process phases including one or more washing phases followed by a plurality of rinse phases. In particular, it should be pointed out that a dishwashing machine from the current production uses on average a total water amount of approx. 25 liters for each complete washing cycle comprising a pre-wash and a main wash phase, followed by three subsequent rinse phases, each one of said phases using five liters of water.

## Claims

1. Method for washing clothes or dishes, particularly in household-type washing machines, comprising at least a washing phase and a plurality of subsequent rinse phases, said phases being preceded by corresponding water fill phases in which the liquor is let into an appropriate tub or tank holding the items to be treated, and being further followed by corresponding phases in which the liquor used for each single treatment is discharged from said tub or tank, wherein the filling of the washing liquor into
said tub or tank is preceded by at least a purification phase consisting of letting said liquor undergo at least a treatment of reverse osmosis or ultrafiltration or nanofiltration or a combination thereof, and the liquor used for the rinse phases is subjected to a preliminary purification phase consisting of at least a treatment of reverse osmosis or ultrafiltration or nanofiltration or a combination thereof,
said preliminary phases of purification of the different loads of washing and rinsing liquor being started and completed in a period of time preceding the phase in which water is required to be let into the tub or tank, preferably in the period between a washing phase and the preceding one,
**characterized in that** the washing liquor is taken from a reservoir (15) which is served by a conduit (17) carrying the liquor being retained by a nanofiltration cell (14), **in that** the liquor for at least a rinse phase is taken from the same reservoir (15), **in that** at least part of the liquor for at least a further rinse phase is taken from another reservoir (13) which is served by a conduit (16) carrying the liquor permeating through the same nanofiltration cell (14), **in that** said nanofiltration cell is supplied with the liquor conveyed thereinto from a reservoir (10) by means of an appropriate pump (12), **in that** said reservoir (10) is supplied with the liquor permeated through an ultrafiltration cell (7) which in turn can be supplied from at least a mechanical filter (6) associated to an appropriate pump (5) that draws the liquor from a collecting reservoir (3) into which all of the liquor discharged from the various phases of the process carried out to wash and rinse said items is conveyed.

2. Method according to the preceding claim, wherein the liquor retained by the ultrafiltration cell (7) is either returned to the collecting reservoir (3) or is definitively discharged from the machine.

3. Method according to any of the preceding claims, **characterized in that** the nanofiltration cell (14) has a retained liquor to permeated liquor ratio of approx. 50:50, **and that** the ultrafiltration cell (7) has a retained liquor to permeated liquor ratio of approx 10:90.

4. Method according to any of the preceding claims, **characterized in that** said recovery reservoir (3) is completely emptied before being again filled with the liquor discharged from the phases of the subsequent washing process.

5. Method according to any of the preceding claims, **characterized in that** the liquor retained by the nanofiltration cell (14) undergoes a new nanofiltration treatment in a subsequent nanofiltration cell (14bis) with the aid of an appropriate pump (12bis), **in that** the liquor retained by said cell (14bis) is conveyed into a reservoir (15a), and **in that** the liquor permeated through said cell is sent into a reservoir (15b).

6. Method according to the preceding claim 5, **characterized in that** the retained liquor to permeated liquor ratio of said nanofiltration cell (14 bis) is approx. 50:50.

7. Method according to the preceding claim 6, **characterized in that** the whole amount of washing liquor is recovered from the reservoir (15a).

8. Method according to the preceding claim 7, **characterized in that** at least part of the liquor used in the subsequent rinse phases of the process is taken from the reservoirs (15b and 13).

9. Method according to claim 1, **characterized in that** the liquor used in the last rinse phase of the process is discharged into the reservoir (10).

10. Method according to claim 1, **characterized in that** the liquor used in the last rinse phase of the process is discharged into the reservoir (13).

11. Method according to any of the preceding claims, **characterized in that** said recovery reservoir (3) is completely emptied before being filled again with the in-flowing liquor discharged from the various phases of the process.

## Patentansprüche

1. Verfahren zum Waschen von Kleidung oder Spülen von Geschirr, insbesondere in Waschmaschinen vom Haushalts-Typ, das mindestens eine Waschphase und eine Vielzahl darauffolgender Spülphasen aufweist, wobei den Phasen entsprechende Wasserfüllphasen, in denen Flüssigkeit in einen geeigneten Bottich oder Behälter, der Gegenstände enthält, die behandelt werden sollen, eingelassen wird, vorausgehen, und weiterhin entsprechende Phasen folgen, in denen die Flüssigkeit, die für eine einzelne Behandlung verwendet wird, aus dem Bottich oder Behälter abgegeben wird, wobei dem Einfüllen der Waschflüssigkeit in den Bottich oder Behälter mindestens eine Reinigungsphase vorausgeht, die darin besteht, die Flüssigkeit mindestens einer Behandlung einer Umkehr-Osmose oder einer Ultrafiltration oder einer Nanofiltration oder einer Kombination davon zu unterwerfen, und die Flüssigkeit, die für die Spülphasen verwendet wird, einer Vorreinigungsphase unterworfen wird, die aus mindestens einer Behandlung einer Umkehr-Osmose oder Ultrafiltration oder Nanofiltration oder einer Kombination davon besteht,
wobei die Vorphasen einer Reinigung der unterschiedlichen Beladungen aus Wasch- und Spülflüssigkeit in einer Zeitperiode gestartet und vervollständigt werden, die der Phase vorausgeht, in der Wasser dahingehend erforderlich ist, daß es in den Bottich oder den Behälter eingelassen wird, vorzugsweise in der Periode zwischen einer Waschphase und der Vorhergehenden,
gekennzeichnet dadurch, daß die Waschflüssigkeit aus einem Reservoir (15) entnommen wird, das durch einen Kanal (17) versorgt wird, der die Flüssigkeit führt, die durch eine Nanofiltrations-Zelle (14) zurückerhalten wird, daß die Flüssigkeit für mindestens eine Spülphase von demselben Reservoir (15) genommen wird, daß mindestens ein Teil der Flüssigkeit für mindestens eine weitere Spülphase aus einem anderen Reservoir (13) entnommen wird, das durch einen Kanal (16) versorgt wird, der die Flüssigkeit führt, die durch dieselbe Nanofiltrations-Zelle (14) permeiert ist, daß die Nanofiltrations-Zelle mit der Flüssigkeit versorgt wird, die dort hinein von einem Reservoir (10) mittels einer geeigneten Pumpe (14) befördert wird, daß das Reservoir (10) mit der Flüssigkeit, die durch eine Ultrafiltrations-Zelle (7) permeiert ist, versorgt wird, die wiederum von mindestens einem mechanischen Filter (6) versorgt werden kann, der einer geeigneten Pumpe (5) zugeordnet ist, die die Flüssigkeit von einem Sammelreservoir (3) ansaugt, in den die gesamte Flüssigkeit, die von den verschiedenen Phasen des Prozesses abgegeben wird, um die Gegenstände zu waschen und zu spülen, befördert wird.

2. Verfahren nach dem vorhergehenden Anspruch, wobei die Flüssigkeit, die durch die Ultrafiltrations-Zelle (7) zurückgehalten ist, entweder zu dem Sammelreservoir (3) zurückgeführt wird oder definitiv aus der Maschine ausgegeben wird.

3. Verfahren nach einem der vorhergehenden Ansprüche, gekennzeichnet dadurch, daß die Nanofiltrations-Zelle (14) eine zurückgehaltene Flüssigkeit zu einer permeierten Flüssigkeit in einem Verhältnis von ungefähr 50:50 besitzt und daß die Ultrafiltrations-Zelle (7) ein Verhältnis einer zurückgehaltenen Flüssigkeit zu einer permeierten Flüssigkeit von ungefähr 10:90 besitzt.

4. Verfahren nach einem der vorhergehenden Ansprüche, gekennzeichnet dadurch, daß das Zurückgewinnnungsreservoir (3) vollständig geleert wird, bevor es wiederum mit der Flüssigkeit gefüllt wird, die von den Phasen der darauffolgenden Waschprozesse abgegeben wird.

5. Verfahren nach einem der vorhergehenden Ansprüche, gekennzeichnet dadurch, daß die Flüssigkeit, die durch die Nanofiltrations-Zelle (14) zurückgehalten ist, einer neuen Nanofiltrationsbehandlung in einer darauffolgenden Nanofiltrationszelle (14bis) mit der Hilfe einer geeigneten Pumpe (12bis) unterworfen wird, daß die Flüssigkeit, die durch die Zelle (14bis) zurückgehalten ist, in ein Reservoir (15a) befördert wird, und daß die Flüssigkeit, die durch die Zelle permeiert ist, in ein Reservoir (15) geschickt wird.

6. Verfahren nach dem vorhergehenden Anspruch 5, dadurch gekennzeichnet, daß das Verhältnis von zurückgehaltener Flüssigkeit zu permetierter Flüssigkeit der Nanofiltrations-Zelle (14bis) ungefähr 50:50 beträgt.

7. Verfahren nach dem vorhergehenden Anspruch 6, dadurch gekennzeichnet, daß die gesamte Menge an Waschflüssigkeit von dem Reservoir (15a) zurückgewonnen wird.

8. Verfahren nach dem vorhergehenden Anspruch 7, dadurch gekennzeichnet, daß mindestens ein Teil der Flüssigkeit, die in den darauffolgenden Spülphasen des Prozesses verwendet wird, aus den Reservoiren (15b und 13) entnommen wird.

9. Verfahren nach Anspruch 1, gekennzeichnet dadurch, daß die Flüssigkeit, die in der letzten Spülphase des Prozesses verwendet wird, in das Resevoir (10) abgegeben wird.

10. Verfahren nach Anspruch 1, dadurch gekennzeichnet, daß die Flüssigkeit, die in der letzten Spülphase des Prozesses verwendet wird, in das Reservoir (13) abgegeben wird.

11. Verfahren nach einem der vorhergehenden Ansprüche, dadurch gekennzeichnet, daß das Zurückgewinnungsreservoir (3) vollständig geleert wird, bevor es wiederum mit der einströmenden Flüssigkeit gefüllt wird, die von den verschiedenen Phasen des Prozesses abgegeben ist.

## Revendications

1. Procédé pour laver des vêtements ou de la vaisselle, en particulier dans des machines à laver du type domestique, comprenant au moins une phase de lavage et une pluralité de phases de rinçage subséquentes, lesdites phases étant précédées par des phases correspondantes de remplissage d'eau, dans lesquelles le produit est admis dans une cuve ou un réservoir approprié contenant les objets destinés à être traités, et étant suivies, en outre, de phases correspondantes, dans lesquelles le produit utilisé pour chaque traitement simple est vidé de ladite cuve ou réservoir, dans lequel le remplissage du produit de lavage dans ladite cuve ou réservoir est précèdé par au moins une phase de purification, consistant à laisser ledit produit subir au moins un traitement d'osmose inverse, ou d'ultrafiltrage, ou de nanofiltrage, ou une combinaison de ceux-ci, et le produit utilisé pour les phases de rinçage fait l'objet d'une phase de purification préliminaire, constituée d'au moins un traitement d'osmose inverse, ou d'ultrafiltrage, ou de nanofiltrage, ou d'une combinaison de ceux-ci, lesdites phases préliminaires de purification des différentes charges du produit de lavage et de rinçage étant commencées et achevées en une durée qui précède la phase dans laquelle il est requis d'admettre de l'eau dans la cuve ou réservoir, de préférence, dans la période comprise entre une phase de lavage et la précédente, caractérisé en ce que le produit de lavage est extrait d'un réservoir **(15)** qui est desservi par un conduit **(17)** transportant le produit conservé par une cellule de nanofiltrage **(14)**, en ce que le produit est extrait du même réservoir **(15)** pendant au moins une phase de rinçage, en ce qu'au moins une partie du produit pendant au moins une autre phase de rinçage est extrait d'un autre réservoir **(13)** qui est desservi par un conduit **(16)** transportant le produit traversant la même cellule de nanofiltrage **(14)**, en ce que ladite cellule de nanofiltrage est alimentée par le produit acheminé dans celle-ci depuis un réservoir **(10)**, au moyen d'une pompe **(12)** appropriée, en ce que ledit réservoir **(10)** est alimenté par le produit traversant une cellule d'ultrafiltrage **(7)**, qui peut être alimentée, à son tour, depuis au moins un filtre mécanique **(6)** associé à une pompe **(5)** appropriée, qui extrait le produit d'un réservoir de collecte **(3)**, dans lequel tout le produit vidé depuis les diverses phases du processus exécuté pour laver et rincer lesdits objets est acheminé.

2. Procédé selon la revendication précédente, dans lequel le produit conservé par la cellule d'ultrafiltrage **(7)** est, soit retourné vers le réservoir de collecte **(3)**, soit définitivement vidé de la machine.

3. Procédé selon l'une quelconque des revendications précédentes, caractérisé en ce que la cellule de nanofiltrage **(14)** a un rapport de produit conservé au produit traversant d'environ 50:50, et en ce que la cellule d'ultrafiltrage **(7)** a un rapport de produit conservé au produit traversant d'environ 10:90.

4. Procédé selon l'une quelconque des revendications précédentes, caractérisé en ce que ledit réservoir de récupération **(3)** est entièrement vidé avant d'être de nouveau rempli avec le produit vidé provenant des phases du processus de lavage subséquent.

5. Procédé selon l'une quelconque des revendications précédentes, caractérisé en ce que le produit retenu par la cellule de nanofiltrage **(14)** subit un nouveau traitement de nanofiltrage dans une cellule de nanofiltrage subséquente **(14bis)**, à l'aide d'une pompe appropriée **(12bis)**, en ce que le produit conservé par ladite cellule **(14bis)** est acheminé dans un réservoir **(15a)**, et en ce que le produit ayant traversé ladite cellule est envoyé dans un réservoir **(15b)**.

6. Procédé selon la revendication 5 précédente, caractérisé en ce que le rapport de produit conservé au produit traversant de ladite cellule de nanofiltrage **(14bis)** est d'environ 50:50.

7. Procédé selon la revendication 6 précédente, caractérisé en ce que la quantité totale de produit de lavage est récupérée depuis le réservoir **(15a)**.

8. Procédé selon la revendication 7 précédente, caractérisé en ce qu'au moins une partie du produit utilisé dans les phases de rinçage subséquentes du processus est extraite des réservoirs **(15b et 13)**.

9. Procédé selon la revendication 1, caractérisé en ce que le produit utilisé dans la dernière phase de rinçage du processus est déchargé dans le réservoir **(10)**.

10. Procédé selon la revendication 1, caractérisé en ce que le produit utilisé dans la dernière phase de rinçage du processus est déchargé dans le réservoir **(13)**.

11. Procédé selon l'une quelconque des revendications précédentes, caractérisé en ce que ledit réservoir de récupération **(3)** est entièrement vidé avant d'être de nouveau rempli avec le produit vidé arrivant, provenant des diverses phases du processus.
